# EUROPEAN PATENT SPECIFICATION

(11) **EP 3 031 353 B1**
(45) Date of publication and mention of the grant of the patent: **06.03.2024**
(21) Application number: 14836928.3
(22) Date of filing: 11.08.2014
(51) Int. Cl.: A46B 15/00, A61C 15/00, A61C 15/02, A61C 19/04, A61C 17/02, A61C 15/04

(54) **ORAL CARE SYSTEM AND METHOD**
MUNDPFLEGESYSTEM UND VERFAHREN
SYSTÈME DE SOINS BUCCAUX ET PROCÉDÉ

(30) Priority: 11.08.2013 US 201361864620 P; 10.08.2014 US 201414455932
(43) Date of publication of application: 15.06.2016
(73) Proprietor: Wang, Yongjing, Jiangsu 215123 (CN)
(72) Inventor: Wang, Yongjing, Jiangsu 215123 (CN)
(74) Representative: London IP Ltd
(86) International application number: PCT/CN2014/084071
(87) International publication number: WO 2015/021895

(56) References cited:
- WO-A1-2010/134050
- WO-A2-2007/122491
- WO-A2-2009/133338
- CN-A- 101 797 187
- CN-A- 102 113 762
- CN-A- 102 427 861
- CN-A- 102 427 862
- CN-A- 102 711 555
- US-A1- 2008 109 973
- US-A1- 2012 295 216

## Description

The present invention relates to daily goods, especially to an oral care system.

Oral care is a process out of sight, for example, when people brush their teeth, they cannot see detailed actions during the process nor judge its results. Accordingly, people cannot determine whether they brush their teeth properly, and adults and children don't normally like to brush.

At present there are several methods to solve the problem. The first method is to install an endoscope on a toothbrush head, which provides a video image of tooth brushing process for users. This method is difficult to be implemented, because the bubble, water and toothpaste during the process form a barrier for optical detection.

The second method is a US patent (No. US7976388), wherein a sensor is installed on the toothbrush head, including temperature and motion sensors, and a direction or acceleration sensor, and these sensors detect data to provide a score or an audio feedback. However, this patent does not provide a process which makes people understand their tooth brushing exactly and virtually. In addition, it is difficult for current sensor technologies to detect the information of absolute position. This patent does not disclose a method by which tooth brushing positions are detected, and in this case, it is impossible to provide a real-time tooth brushing video and a virtual brushing process.

WO2010134050A1 discloses a toothbrush as well as a display device for displaying interactive representations that can be controlled interactively from the care tool by means of a control device, wherein a sensing device for sensing at least one operating parameter relating to the toothbrush is provided.

The technical problem to be solved by the present invention is how to make people know their tooth brushing process exactly and virtually so as to brush their teeth in a better way.

To solve the technical problem, the present invention discloses an oral care system as defined in claim 1. Further embodiments of the invention are recited in the dependent claims. The oral care system at least comprises an oral care tool, a terminal equipment and a sensing device installed on said oral care tool; said sensing device is configured to detect real-time dynamic data of said oral care tool so as to obtain real-time positions of said oral care tool and transmit them to said terminal equipment, or otherwise to directly detect real-time dynamic data of said oral care tool and transmit them to said terminal equipment, which obtains real-time positions of said oral care tool.

Said terminal equipment is configured to update a virtual image in real time according to real-time positions of said oral care tool during the oral care process; at least the images used to represent said oral care tool, the images used to represent the teeth and the positions between them are made to be updated and displayed in real time according to these real-time positions. Said sensing device at least comprises a first detection module and a second detection module;
Said first detection module is configured to obtain the absolute position of said oral care tool;
Said second detection module is configured to distinguish whether upper teeth or lower teeth are cared.
Said first detection module is configured to detect yaw angles of said oral care tool and then acquire the absolute position of said oral care tool in real time according to the differences in yaw angles between real-time positions and initial reference positions and the radian information of gums.

The sensing device used by said first detection module is a gyroscope and magnetometer, which are installed on said oral care tool to obtain yaw angles of said oral care tool by said gyroscope and magnetometer.

Said first detection module is configured to acquire the acceleration of said oral care tool and then the horizontal and vertical positions of said oral care tool based on the acceleration and initial reference positions, thereby obtaining the absolute position of said oral care tool in real time.

The sensing device used by said second detection module is a pressure sensor, which is installed on one end of said oral care tool, and through the direction of pressure applied to said pressure sensor, said second detection module determines whether upper teeth or lower teeth are cared.

The sensing device used by said second detection module is at least an optical sensor, which is installed on one end of said oral care tool and located at the upper side or lower side of said oral care tool, and through the light intensity of said optical sensor, said second detection module determines whether upper teeth or lower teeth are cared.

Said sensing device also includes a third detection module and a fourth detection module; said third detection module is configured to obtain the intensity of oral care and said fourth detection module is configured to obtain biochemical information in the oral cavity.

Said oral care system further comprises a cloud server; said terminal equipment realizes mutual data communication with said cloud server via network as well as with other terminal equipments via said cloud server, and said terminal equipment is also configured to record oral care data and upload them to said cloud server.

Said oral care tool is any of the following tools or any combination of them: toothbrush, dental floss, gum care tool, and oral water jet rinser.

Said oral care system also comprises a timer, which is installed in said oral care tool or said terminal equipment.

Said terminal equipment is also configured to simulate an initial virtual image before oral care, which at least displays the image used to represent the teeth, the image used to represent said oral care tool, and the initial position between them.

Said image used to represent the teeth matches the real teeth.

The present disclosure also provides an oral care method, not comprised within the invention, which provides an oral care tool, a terminal equipment and a sensing device installed on said oral care tool, and said method consists of the following steps:
Real-time dynamic data of said oral care tool are detected by said sensing device to obtain real-time positions of said oral care tool and transmit them to said terminal equipment, or real-time dynamic data of said oral care tool are directly detected and transmitted to said terminal equipment, which obtains real-time positions of said oral care tool;
A virtual image is updated in real time according to real-time positions of said oral care tool; at least the image used to represent said oral care tool, the image used to represent the teeth, and the positions between them are made to be updated and displayed in real time according to these real-time positions;
The oral care is completed.

During the oral care process, the image of foreign matters is also displayed on an image used to represent the teeth and disappears with the care of said oral care tool on the corresponding position; the image of foreign matters disappears only when the care on the tooth position corresponding to foreign matters reaches the preset intensity, and the image display position and quantity of said foreign matters are preset.

Said terminal equipment also receives operations of medical workers or others via a cloud server to achieve specific setting of the display position and quantity of foreign matters.

During the oral care process, the color of an image used to represent the teeth changes accordingly with the care intensity variation on the corresponding position.

During the oral care process, said virtual image is also provided with a guide image used to realize the care position guidance, and the position and position change of said guide image are preset according to an ideal care model.

Upon the completion of oral care, said terminal equipment also generates a care score by comparing the preset ideal care model with actual care process and displays a feedback.

Said terminal equipment records relevant service time of said oral care tool to calculate the service condition of said oral care tool and to quantitatively display such service condition on said virtual image.

Upon the completion of oral care, said terminal equipment also sends care results to terminal equipments of a patient's parents or others via a cloud server, and said care results at least include whether oral care is completed. The present example, not covered by the invention, discloses an oral care method, wherein said terminal equipment is at least used to update a virtual image in real time according to real-time dynamic data during the oral care process, achieving visualization of tooth brushing process and making people able to see detailed tooth brushing actions so as to benefit the judgment of oral care results. Furthermore, the oral care system of the present invention provide the possibility of more reasonably guiding tooth brushing actions.
Figure 1 shows a diagram of the oral care system in one embodiment of the invention;
Figure 2 shows a data transfer diagram in one embodiment of the invention;
Figure 3 shows a structural diagram of the toothbrush in one embodiment of the invention;
Figure 4 shows a principle diagram of obtaining the relative working position between the oral care tool and teeth with yaw angle in one embodiment of the invention;
Figure 5 shows a diagram of showing foreign matters in one embodiment of the invention;
Figure 6 shows a flow diagram of the oral care method in one embodiment of the invention;
Figure 7 shows a schematic diagram differentiating whether the teeth brushed are upper or lower teeth in one embodiment of the invention.

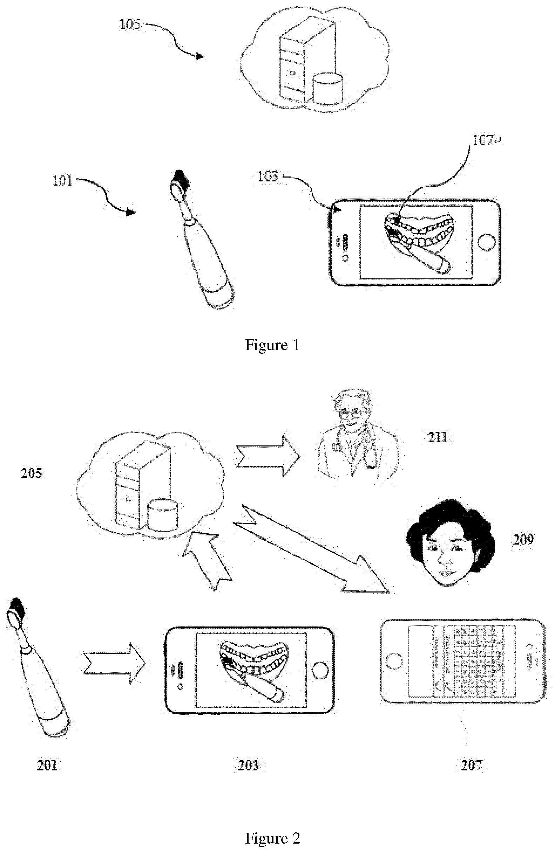

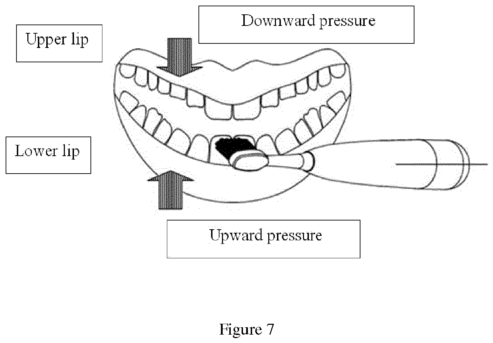

The oral care system provided by the invention will be described in detail combining Figure 1 to Figure 7.

See Figure 1, the embodiment has provided an oral care system, at least comprising an oral care tool 101 and a terminal device 103, where the said oral care tool 101 is arranged with a sensing device. It can further comprise a cloud server 105. When users are brushing with the said oral care tool 101, the sensing device therein will detect the position and movement information of the oral care tool 101, then send the data to the terminal device103. The said terminal device can be a smartphone or tablet PC, etc. Software in the terminal device103 will process all data information from the sensor, and then produce a simulated image 107, and the simulated image107 has reflected the tooth brushing process and result. Such data will be sent and stored to the cloud server 105. The cloud server 105 can send information to the smartphone with software applications of the parents, so that parents can supervise the tooth brushing process of their children. For medical purposes, dentists can also access the data of tooth brushing of their patients.

In the said oral care system, the said sensing device is configured into the real time dynamic data detecting the said oral care tool, thus to obtain real-time position of the said oral care tool, and transmit it to the said terminal device; or directly detect the real time dynamic data of the said oral care tool, and transmit it to the terminal device, and the real time position of the said oral care tool will be obtained by the said terminal device;

The said terminal device is configured into real-time update of a virtual image in the oral care process according to the real-time position of the oral care tool; at least enable the image presenting the oral care tool, the image presenting the teeth as well as the position between the two to conduct real-time update display according to the real-time position.

Besides, said terminal device is configured as simulating an initial virtual image before oral care; the virtual image has at least displayed the image describing the teeth, the image describing the oral care tool as well as the initial position between the two.

The oral care tool will be introduced in detail as follows:
The said oral care tool is any of the following tools or any combination thereof: a toothbrush, a dental floss, a gum care tool, an oral water jet rinser. Of course, the embodiment illustrates the oral care tool by taking a toothbrush as an example.

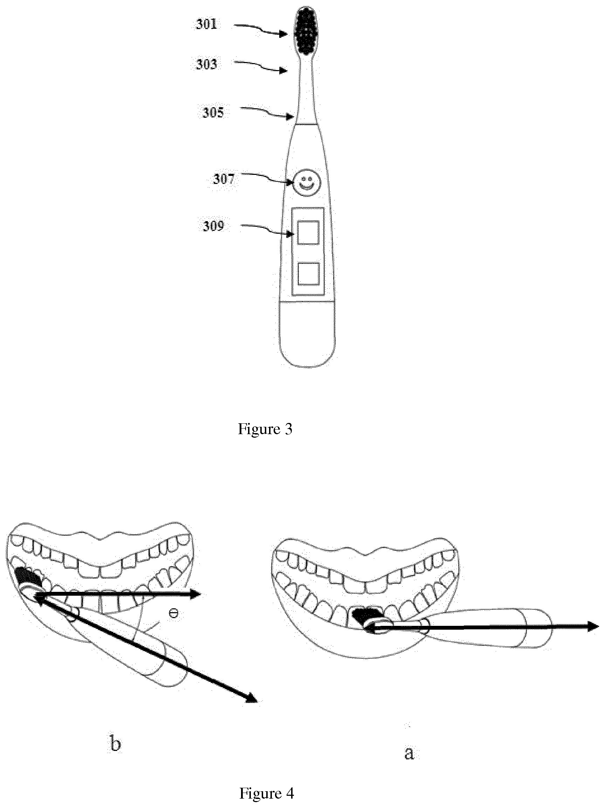

As is shown in Figure 3, it has the component required by traditional toothbrush: a brushing hair 301, a post 303 and a main body 305. The main body 305 is arranged with a wireless transmission unit 309, and a sensing device 307 is arranged on the post 303 or the main body 305. The embodiment only shows the position of the sensing device 307. It can't be fully expressed as many contents are contained therein. In terms of equipment, the said sensing device comprises but not limited to gyroscope, magnetometer, accelerometer, thermometer and optical sensor. Timer is an essential tool for detecting the tooth brushing time, which can either located on the oral care tool, or on the terminal device, such as the smartphone and tablet PC. Gyroscope and magnetometer are used for detecting the actual rotation angle, namely the roll angle, pitch angle and yaw angle of a toothbrush. Roll and pitch angle can be used to determine the conditions on the tooth brushing surface and the teeth brushing angle.

The said sensing device will be introduced below based on the previous statement:
The said sensing device is configured as detecting the real time dynamic data of the said oral care tool, thus to obtain the real-time position of the said oral care tool, and transmit it to the said terminal device;
The said sensing device at least comprises a first detection module and a second detection module;
The said first detection module is configured as obtaining the absolute position of the said oral care tool;
The said second detection module is configured as differentiating whether the teeth cared are the upper teeth or the lower teeth.

The said sensing device further comprises a third detection module: the said third detection module is configured as obtaining the oral care strength.

It should be noted that these detection modules are distinguished by function only and could be repeated. Of course, data detected by the sensing device can't be limited to these.

For the first detection module:
In an optional embodiment as is shown in Figure 4, the said first detection module is configured as detecting and obtaining the yaw angle of the said oral care tool, then obtaining the absolute position of the said oral care tool at such moment according to the difference of yaw angle between the real-time position and the initial reference position as well as the radian information of the gum. Specifically, the yaw angle will first be detected. Since the gum has definite radian, we can convert the yaw angle into the absolute position information of tooth brushing. As is shown in Figure 4(a), take the position of the incisors as the benchmark, when a user is brushing the incisors, the yaw angle is 0. As is shown in Figure 4(b), when the user is brushing the most inside molars, the yaw angle shall be of maximum value. Therefore, the yaw angle of a toothbrush can be calculated with the linear equation interpolation method. By detecting the yaw angle, position of the teeth brushed can be detected, namely, the relative position between the oral care tool and the teeth at such time. Sensing equipments adopted by the said first detection module shall be gyroscope and magnetometer. The said gyroscope and magnetometer are installed on the said oral care tool, thus to obtain the yaw angle of the said oral care tool. Besides, the said gyroscope and magnetometer can detect the rotation position of the said oral care tool if installed on the said oral care tool. When the toothbrush is used for the first time by users, the yaw angle corresponding to the incisors and the most inside molars are required to be detected and corrected.

In another optional embodiment, the said first detection module is configured as obtaining the acceleration of the said oral care tool, then obtaining the horizontal and vertical position of the said oral care tool according to the acceleration and the initial reference position, and then obtaining the absolute position of the said oral care tool. In the embodiment, the sensing equipment adopted by the first detection module is an accelerometer. Besides, the accelerometer can also be adopted by the second detection module, and the toothbrush can detect the vertical acceleration. When users complete the brushing of the upper teeth, and move the toothbrush to the lower teeth, vertical acceleration will be produced, and such information will be detected by the sensor in the toothbrush. The application software will determine whether to brush the upper or lower teeth according to such information.

In another optional embodiment, the sensing equipment adopted by the said first detection module is an optical sensor. The said optical sensor is arranged at one end of the said oral care tool, and in this embodiment, it can be placed at one end of the oral cavity. The said second detection module judges the position of the said oral care tool in the oral cavity via the light intensity detected by the said optical sensor, and then obtains the relative position between the said oral care tool and the teeth. The action principle thereof is as follows: usually, when users are brushing the incisors, there will be maximum light intensity, while users are brushing the innermost teeth, there will be minimum light intensity.

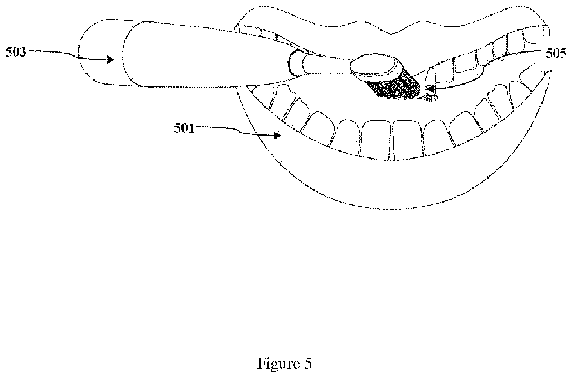

For the second detection module:
In an optional embodiment of the invention, the sensing equipment adopted by the said second detection module is a pressure sensor. The said pressure sensor is arranged at one end of the said oral care tool, and in this embodiment, it can be placed at one end of the oral cavity. The said second detection module judges whether the teeth cared are the upper teeth or lower teeth through the direction of being pressed against the said pressure sensor. Specifically, as is shown in Figure 5, the pressure sensor is place at the head part of the toothbrush. The pressure sensor detects the direction of force, so as to determine whether they are the upper teeth or lower teeth. When a user is brushing the upper teeth, the upper lip will push the pressure sensor downward; when the user is brushing the lower teeth, the lower lip will push the pressure sensor upward, thus to determine whether they are the upper or lower teeth.

In another optional embodiment, the sensing equipment adopted by the said second detection module shall be at least one optical sensor. The said optical sensor is arranged at one end of the oral cavity where the said oral care tool is placed, and the said optical sensor shall be located at the upper edge or lower edge of the said oral care tool. The said third detection module judges whether the teeth cared are the upper teeth or lower teeth through the light intensity of the said optical sensor. Of course, two optical sensors can be adopted as well, which shall be respectively arranged on the upper edge and lower edge of the oral care tool. Specifically, the optical sensor shall be placed at the upper edge of the toothbrush head. When a user is brushing the upper teeth, the upper lip will keep off light rays. Thus, whether the user is brushing the upper teeth or the lower teeth can be judged from the reading of the sensor. The other optical sensor can be placed at the lower edge of the toothbrush head. The two optical sensors can work together to provide more accurate information.

For the third type of sensor:
In an optional embodiment, the sensing equipment adopted by the said third detection module is an accelerometer. The said accelerometer is arranged on the said oral care tool. As to the said third kind of detection, care strength is obtained through the quality information of the said accelerometer and the said oral care tool.

In another optional embodiment, the sensing equipment adopted by the said third detection module is a pressure sensor, which is arranged on the surface of the said oral care tool, for detecting and obtaining the care strength. Of course, the pressure sensor can also be replaced by a load transducer.

All information from the sensor will be transmitted to a dedicated device or general-purpose equipment similar to a smartphone or tablet PC, namely, the said terminal device in wireless form. Such terminal device is not only the main controller of the system, but also the place where the terminal device lie. In the embodiment, take smartphone as an example, and the similar principle also applies to other portable devices, such as tablet PC or dedicated device.

In an optional embodiment of the invention, the said sensing device can further comprise the fourth detection module, configured as obtaining the biochemical information in oral cavity, detecting the health status of users. This detection module adopts biochemical sensor. The said terminal device can also be used to display information showing health status, and upload such information to the cloud server, for being accessed by medical staffs, parents or other personnel.

The said oral care tool can be any of the following tools or any combination thereof: a toothbrush, a dental floss, a gum care tool, an oral water jet rinser.

The said oral care system further comprises a timer, which is arranged in the said oral care tool or the terminal device.

The cloud server will be illustrated below in detail:
Data transmission between the said terminal device and the said cloud server is realized via network, or via the said cloud server and other terminal devices. Besides, the said terminal device can be used to record oral care data, and upload it to the said cloud server.

The said cloud server can also be used to respond the operation of the medical staffs or other personnel, sending the instructions to the said terminal device. Of course, medical staffs can also operate directly on the cloud server, or conduct such operation with the corresponding software on other terminal devices, and transmit the data to the cloud server.

When the oral care system is considered as a diagnosis and treatment system, the cloud server will be used to store the detailed care data of each tooth brushed, for medical staffs to diagnose and sent back the medical result to the said terminal device. The said terminal device can also be used to conduct corresponding display processing according to the instructions of the medical staff.

"Instruction" referred to hereof can at least comprise dentists' setting of foreign matters or boot image according to the difference between the actual tooth brushing mode and ideal tooth brushing mode. The definition of foreign matter and boot image will be illustrated at the time of illustrating the oral care method below.

Besides, the oral care data uploaded to the said cloud server shall at least comprise information of whether teeth are brushed and tooth brushing care score. It can be the data obtained by the sensing device, or the data obtained from the data processed as detected by the sensing device. In an optional embodiment, the data shall be the care intensity of each face of each tooth. In an optional embodiment, the data can also be a virtual video of tooth brushing. The virtual video will record simulated all images in the terminal device, which can also be screenshots of the images. In brief, it shall be able to reflect the data of the tooth brushing process or result. Of course, it shall be data processed or simplified, rather than all data. That is, the "oral care data" shall be defined as the data reflecting the tooth brushing process or result. Therefore, there will neither be ambiguity, nor insufficient disclosure. Information will be different according to the objects taken or referred to. For example, information sent to the parents' software can only include the information of whether the teeth are brushed and the tooth brushing score, while those sent to the dentist may be more concrete.

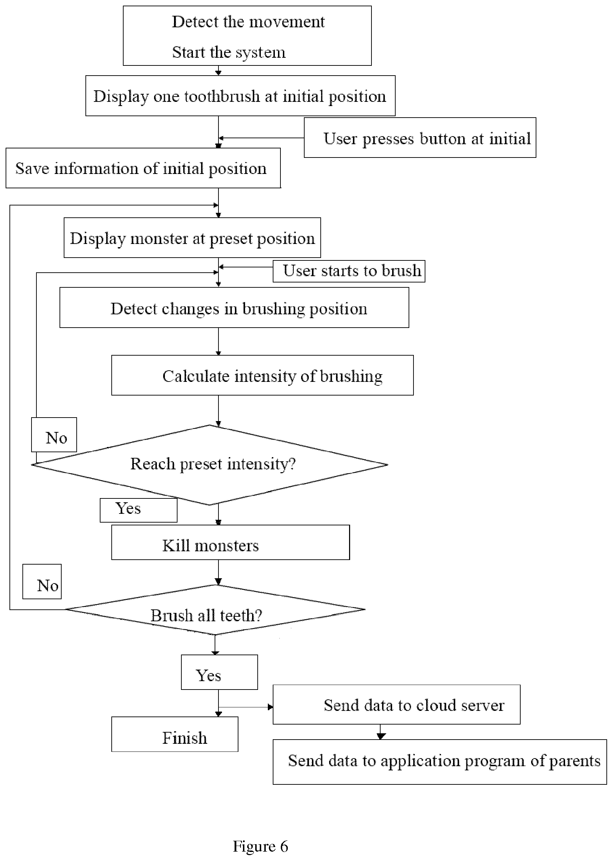

The oral care method provided by the example will be illustrated in detail based on the previous statement, pls refer to Figure 6:
The method shall comprise the following steps:
Detect the real time dynamic data of the said oral care tool with the said sensing device, thus to obtain the real-time position of the said oral care tool, and transmit it to the said terminal device; or directly detect the real time dynamic data of the said oral care tool, and transmit it to the terminal device, and the real time position of the said oral care tool will be obtained by the said terminal device;
Update a virtual image in real time according to the real-time position of the oral care tool; at least enable the image describing the oral care tool, the image describing the teeth as well as the position between the two to conduct real-time update display according to the real-time position;
The oral care is completed.

Before oral care, an initial virtual image will be simulated as well. Such virtual image has at least displayed the image describing the teeth, the image describing the oral care tool as well as the initial position between the two; and the said image representing the teeth matches with the actual teeth.

It shall be noted that, the image describing the teeth and the image describing the oral care tool referred to in the embodiment are mainly for showing their corresponding relationship with the teeth and the oral care tool, rather than simply showing the teeth and the oral care tool. Nevertheless, regardless of what the teeth image looks like, its shape and structure shall be of the matched mapping relationship with the actual teeth. Namely, the said image describing the teeth matches with the real teeth; for instance, quantity, arc arrangement and different tooth shapes, etc. shall be associated with the actual teeth. Similarly, the oral care tool can also be set in a similar way.

To guide the dental care process, namely the tooth brushing process in a better way in the embodiment, in the oral care process, an image of foreign matters will also be displayed on the image describing the teeth in the virtual image. In the oral care process, the image of foreign matters will disappear along with the care from the oral care tool at the corresponding position;

Only when the foreign matters are cared to the preset intensity at the corresponding tooth position, can the image of the foreign matters disappear. Besides, the image display position and quantity of the said foreign matter shall be set ahead of schedule. The said terminal device in the embodiment also receives the operation of the medical staff or other personnel through a cloud server, realizing the concrete setting of the display position and quantity of the foreign matters.

The care "intensity", namely the tooth brushing intensity in the embodiment can be obtained according to the tooth brushing time, tooth brushing position, tooth brushing angle and force as well as the data computation from the sensing device. On principle, tooth brushing intensity of certain position has something to do with the brushing time, force, frequency and other factors of the position. Technicians of the field can conduct concrete setting according to the specific type, specific needs and different individual habits, etc. of tooth brushing or oral care, given that the degree of brushing is described. It is needless for the invention to especially limit the factors and values considered and calculated as well as the calculation method, as technicians of the field can obtain specific solutions based on common sense as well. Therefore, such definition will not lead to the problem of inadequate or unclear disclosure.

In one relatively good case of nursing, the images of different foreign matters appear on the tooth image in succession during the care process of oral cavity, and the image of foreign matter in latter order will only appear after the image of the last foreign matter disappear. It is for the purpose of providing better guidance for brushing teeth. During the care process, the color mentioned to represent the image of teeth will change correspondingly according to the change in care intensity of corresponding position.

It can be observed that the terminal device mentioned will respond to the data transmitted by the cloud server and other terminal devices mentioned and then carry out corresponding operation. Through cloud server, data can be transferred to others' mobile terminal like parents, so that parents can trace the process of brushing teeth of their children, and parents can also use the application to give feedback information, and then feed back the data transmission and can provide corresponding rewards for children, which can be marks or virtual gold coins according to the performance of data received, etc, and such description is only for representing the meaning that this method will further perform according to the data uploaded to cloud server or other terminal devices, instead of simply uploading data.

In one optional case of example of this invention, the foreign matter mentioned can be food residue, while in this case of example, the foreign matter mentioned is monster 505 referring to figure 5, which means that this virtual image is made into a game interface based on teeth and toothbrush, and in figure 5 it is showed a case of example of the game design. An image 501 of teeth is used as the background figure of the game. The actual teeth of the users are mapped into the image 501 of teeth. A toothbrush 503 moves along with the toothbrush. According to suggestions of the dentist, a monster 505 will appear on different teeth and on different surfaces. The user uses the toothbrush to brush teeth, and the toothbrush in the game will attack the monster according to the user's movement of brushing teeth. When the intensity of brushing teeth meets the requirements, the monster in the game will be killed and the monster will move to another position. Such process will be repeated constantly in the game, until the teeth are cleaned. Certainly, there will be multiple monsters appearing at the same time instead of appearing one after another in succession, and it is also an optional method.

Furthermore, in another optional case of example, it is the thematic background of the game that will appear at first, instead of the image of teeth. Different positions of the thematic background of the game will be connected with different teeth, and the weapon or tools of the game will be showed to simulate the toothbrush and the weapon of the game will move according to the movement of toothbrush, and game characters the same as the monster will appear in different positions and the user shall use the toothbrush to control the weapon in the game to kill the monster, and the monster will appear in specific positions at a certain frequency according to the demand of tooth brushing, which can be determined by the appearing time of monsters that is preset.

In another case of example of this invention, the monster will appear on the upper teeth and then on the lower teeth. In this way, the user can follow the guidance of the game and brush the teeth according to the position of monsters and the direction of moving. Therefore, the information of distinguishing upper and lower teeth is the key to completely reproduce the simulation image of brushing teeth. For such foreign matters or monsters, it will display a simulated image for guidance when the toothbrush is placed on the upper or lower teeth that need brushing, and the user can follow the guidance and can be aware of brushing the teeth on upper or lower side.

One terminal device is interconnected with other terminal devices through a cloud server and conduct date exchange. For example, all virtual images corresponding to all terminal devices that are interconnected can be displayed in each terminal device mentioned. Namely, from the prospective of the game, on-line fight can be conducted by different terminal devices through network, and the results of the fight can be showed by the marks of nursing, and through the comparison of marks, it can better stimulate the user to brush in a better way or stimulate their enthusiasm for oral care.

A guiding image for realizing the guidance of care position is also set up in the virtual image mentioned, and the position and change in position of the guiding image are both preset according to ideal care model. The effect is similar to the setting up of foreign matters, and the two schemes can be performed respectively and jointly. It is better that the appearance of such guiding image matches the image representing said oral care tool, and it can be showed with the image used to represent said oral care tool, and a relatively light color or black and white image representing said oral care tool is used for display.

After completing the nursing, the terminal device mentioned will conduct the generation of care marks and presentation of feedback according to the comparison of preset ideal care model and the process of actual nursing. The generation of marks is one of important linkages of the game.

The terminal device mentioned will also record the time of using of corresponding oral care tools mentioned to calculate the degree of wearing and to display it in quantification on the virtual image mentioned. The display of such quantification can be a simple bar of measurement, and can be developed into images of "health point" according to the difference in different game scenes.

After completing the nursing, the terminal device mentioned will send the results of oral care to the terminal device of the parents or other people through the cloud server, and the results of care mentioned will at least include the content whether the care is completed or not. And of course it shall also include the marks of nursing.

There is one database in this cloud server for storing the information of tooth brushing of different users, and the data can be used by parents and dentists, and the dentist will diagnose the potential oral problems of their patients through the analysis of detailed data. In one optional case of example of this invention, the dentist will send the instruction of prescription to such terminal device to change the process, and the software process after modification of the terminal device will help the user to clean the teeth with problems in a better way.

Please refer to figure 2 - a schematic diagram of data transmission, and toothbrush 201 will collect the data of the movement of tooth brushing and send the data to the terminal device 203. It applies the terminal device 203 to send detailed data of tooth brushing to cloud server 205. The cloud server will send the data to the smart phone terminal 207 of parents and parents 209 can monitor the process of tooth brushing. Dentist 211 can obtain detailed information on tooth brushing through cloud server 205 in order to help diagnose. And this is only the data flow diagram after simplification, furthermore, parents or dentists can send data to the terminal device and change the process of application software and improve the efficiency of tooth brushing.

To sum up, this invention provides a system of oral care, and since the terminal device is equipped in the process of oral care at the very least, the virtual images can be updated in real time based on the real-time dynamic data and the visualization of tooth-brushing process can be realized, so that everyone can see their detailed movement of tooth brushing and it facilitates them to judge the results. Furthermore, the oral care system of this invention also provide possibility for reasonable guidance on the movement of tooth brushing.

## Claims

1. An oral care system at least comprises an oral care tool (101), a terminal equipment (103) and a sensing device (307) installed on said oral care tool;
wherein
said sensing device is configured to detect real-time dynamic data of said oral care tool to obtain real-time absolute positions of said oral care tool and transmit them to said terminal equipment, or otherwise to directly detect real-time dynamic data of said oral care tool and transmit them to said terminal equipment, which obtains real-time positions of said oral care tool;
said terminal equipment is configured to update virtual images (107) in real time according to real-time positions of said oral care tool during the oral care process; at least the images used to represent said oral care tool, the images used to represent the teeth and the positions between them are made to be updated and displayed in real time according to these real-time positions;
wherein said sensing device at least comprises a first detection module and a second detection module; wherein said second detection module is configured to distinguish whether upper teeth or lower teeth are cared,
**characterized in that** said first detection module is configured to obtain the absolute position of said oral care tool;
said first detection module is configured to detect yaw angles of said oral care tool and then calculate the absolute position of said oral care tool in real time according to the differences in yaw angles between real-time positions and initial reference positions and the radian information of gums;
the sensing device used by said first detection module comprises a gyroscope and magnetometer, which are installed on said oral care tool to obtain yaw angles of said oral care tool by said gyroscope and magnetometer.

2. The oral care system as set forth in claim 1, **characterized in that**: said first detection module is configured to acquire the acceleration of said oral care tool and then the horizontal and vertical positions of said oral care tool based on the acceleration and initial reference positions, thereby obtaining the absolute position of said oral care tool in real time.

3. The oral care system as set forth in claim 1 or 2, **characterized in that**: the sensing device used by said second detection module comprises a pressure sensor, which is installed on one end of said oral care tool, and through the direction of pressure applied to said pressure sensor, said second detection module determines whether upper teeth or lower teeth are cared.

4. The oral care system as set forth in any preceding claim, **characterized in that**: the sensing device used by said second detection module comprises at least an optical sensor, which is installed on one end of said oral care tool and located at the upper side or lower side of said oral care tool, and through the light intensity of said optical sensor, said second detection module determines whether upper teeth or lower teeth are cared.

5. The oral care system as set forth in any preceding claim, **characterized in that**: said sensing device also includes a third detection module and a fourth detection module; said third detection module is configured to measure the force of brushing and said fourth detection module is configured to measure biochemical information in the oral cavity.

6. The oral care system as set forth in any preceding claim, **characterized in that**: it further comprises a cloud server (105); said terminal equipment has mutual data communication with said cloud server via network as well as with other terminal equipment via said cloud server, and said terminal equipment is also configured to record oral care data and upload them to said cloud server.

7. The oral care system as set forth in any preceding claim, **characterized in that**: said oral care tool is any of the following tools or any combination of them: toothbrush, dental floss, gum care tool, and oral water jet rinser.

8. The oral care system as set forth in any preceding claim, **characterized in that**: said terminal equipment is also configured to simulate an initial virtual image before oral care, which at least displays the image used to represent the teeth, the image used to represent said oral care tool, and the initial position between them.

## Patentansprüche

1. Ein Mundpflegesystem umfasst mindestens ein Mundpflegewerkzeug (101), eine Endvorrichtung (103) und eine Sensoreinheit (307), die an dem Mundpflegewerkzeug angebracht ist;
wobei
diese Sensoreinheit konfiguriert ist, dynamische Echtzeit-Daten dieses Mundpflegewerkzeugs zu erfassen, um absolute Echtzeit-Positionen des Mundpflegewerkzeugs zu erhalten und an die Endvorrichtung zu übertragen, oder andererseits dynamische Echtzeit-Daten dieses Mundpflegewerkzeugs direkt zu erfassen und an die Endvorrichtung zu übertragen, die Echtzeit-Positionen dieses Mundpflegewerkzeugs erfasst;
die Endvorrichtung ist konfiguriert, virtuelle Bilder (107) in Echtzeit, gemäß den Echtzeit-Positionen des Mundpflegewerkzeugs während des Mundpflegevorgangs zu aktualisieren; mindestens die Bilder, die verwendet werden, um das Mundpflegewerkzeug zu repräsentieren, die Bilder, die verwendet werden, um die Zähne und die Positionen dazwischen zu repräsentieren, werden gemäß dieser Echtzeit-Positionen in Echtzeit aktualisiert und angezeigt;
wobei die Sensoreinheit mindestens ein erstes Erfassungsmodul und ein zweites Erfassungsmodul umfasst;
wobei das zweite Erfassungsmodul konfiguriert ist, zu unterscheiden, ob die oberen oder die unteren Zähne gepflegt werden,
**gekennzeichnet dadurch, dass** das erste Erfassungsmodul konfiguriert ist, die absolute Position des Mundpflegewerkzeugs zu erhalten;
das erste Erfassungsmodul ist konfiguriert, die Gierwinkel des Mundpflegewerkzeugs zu erfassen und dann die absolute Position des Mundpflegewerkzeugs in Echtzeit, gemäß den Unterschieden in den Gierwinkeln zwischen den Echtzeit-Positionen und den Anfangs-Referenzpositionen und den Bogenmaß-Informationen des Zahnfleischs, zu berechnen;
die von dem ersten Erfassungsmodul verwendete Sensoreinheit umfasst ein Gyroskop und ein Magnetometer, die in das Mundpflegewerkzeug eingebaut sind, um die Gierwinkel des Mundpflegewerkzeugs über dieses Gyroskop und Magnetometer zu erhalten.

2. Mundpflegesystem nach Anspruch 1, **gekennzeichnet dadurch, dass**: Das erste Erfassungsmodul konfiguriert ist, die Beschleunigung des Mundpflegewerkzeugs und dann die horizontale und vertikale Position des Mundpflegewerkzeugs, basierend auf der Beschleunigung und den Anfangs-Referenzpositionen, zu erfassen und dadurch die absolute Position des Mundpflegewerkzeugs in Echtzeit zu erhalten.

3. Mundpflegesystem nach Anspruch 1 oder 2, **gekennzeichnet dadurch, dass**: Die von dem zweiten Erfassungsmodul verwendete Sensoreinheit einen Drucksensor umfasst, der an einem Ende des Mundpflegewerkzeugs angebracht ist, und anhand der Richtung des Drucks, der auf den Drucksensor ausgeübt wird, bestimmt das zweite Erfassungsmodul, ob die oberen oder die unteren Zähne gepflegt werden.

4. Mundpflegesystem nach einem der vorhergehenden Ansprüche, **gekennzeichnet dadurch, dass**: Die von dem zweiten Erfassungsmodul verwendete Sensoreinheit mindestens einen optischen Sensor umfasst, der an einem Ende des Mundpflegewerkzeugs an der Oberseite oder der Unterseite des Mundpflegewerkzeugs angebracht ist und dass anhand der Lichtstärke des optischen Sensors das zweite Erfassungsmodul bestimmt, ob die oberen oder die unteren Zähne gepflegt werden.

5. Mundpflegesystem nach einem der vorhergehenden Ansprüche, **gekennzeichnet dadurch, dass**: Die Sensoreinheit auch ein drittes Erfassungsmodul und ein viertes Erfassungsmodul beinhaltet; dieses dritte Erfassungsmodul ist konfiguriert, die Bürstkraft zu messen und das vierte Erfassungsmodul ist konfiguriert, die biochemischen Informationen in der Mundhöhle zu messen.

6. Mundpflegesystem nach einem der vorhergehenden Ansprüche, **gekennzeichnet dadurch, dass**: Es ferner einen Cloud-Server (105) umfasst; die Endvorrichtung hat über ein Netzwerk eine gegenseitige Datenkommunikation mit dem Cloud-Server ebenso mit anderen Endvorrichtungen über diesen Cloud-Server, und diese Endvorrichtung ist ebenfalls konfiguriert, Mundpflegedaten aufzuzeichnen und sie in den Cloud-Server hochzuladen.

7. Mundpflegesystem nach einem der vorhergehenden Ansprüche, **dadurch gekennzeichnet, dass**: Das Mundpflegewerkzeug eines der folgenden Werkzeuge oder eine Kombination daraus ist: Zahnbürste, Zahnseide, Zahnfleisch-Pflegewerkzeug und oraler Wasserstrahlspüler.

8. Mundpflegesystem nach einem der vorhergehenden Ansprüche, **gekennzeichnet dadurch, dass**: Die Endvorrichtung auch konfiguriert ist, ein virtuelles Anfangsbild vor der Mundpflege zu simulieren, das mindestens das Bild anzeigt, das verwendet wird, um die Zähne darzustellen, und das Bild, das verwendet wird, um das Mundpflegewerkzeug und die Anfangsposition zwischen ihnen darzustellen.

## Revendications

1. Système d'hygiène buccale comprenant au moins un outil d'hygiène buccale (101), un équipement terminal (103) et un dispositif de détection (307) installé sur ledit outil d'hygiène buccale ;
dans lequel
ledit dispositif de détection est conçu pour détecter des données dynamiques en temps réel dudit outil d'hygiène buccale pour obtenir des positions absolues en temps réel dudit outil d'hygiène buccale et les transmettre audit équipement terminal, ou autrement de détecter directement des données dynamiques en temps réel dudit outil d'hygiène buccale et les transmettre audit équipement terminal, qui obtient des positions en temps réel dudit outil d'hygiène buccale ;
ledit équipement terminal est conçu pour mettre à jour des images virtuelles (107) en temps réel en fonction des positions en temps réel dudit outil d'hygiène buccale pendant le processus d'hygiène buccale ; au moins les images utilisées pour représenter ledit outil d'hygiène buccale, les images utilisées pour représenter les dents et les positions entre elles sont mises à jour et affichées en temps réel en fonction de ces positions en temps réel ;
dans lequel ledit dispositif de détection comprend au moins un premier module de détection et un deuxième module de détection ;
dans lequel ledit deuxième module de détection est conçu pour distinguer si les dents supérieures ou les dents inférieures sont soignées,
**caractérisé en ce que** ledit premier module de détection est conçu pour obtenir la position absolue dudit outil d'hygiène buccale ;
ledit premier module de détection est conçu pour détecter les angles de lacet dudit outil d'hygiène buccale, puis calculer la position absolue dudit outil d'hygiène buccale en temps réel en fonction des différences d'angles de lacet entre les positions en temps réel et les positions de référence initiales et les informations en radian des gencives ;
le dispositif de détection utilisé par ledit premier module de détection comprend un gyroscope et un magnétomètre, qui sont installés sur ledit outil d'hygiène buccale pour obtenir des angles de lacet dudit outil d'hygiène buccale par lesdits gyroscope et magnétomètre.

2. Système d'hygiène buccale tel qu'énoncé dans la revendication 1, **caractérisé en ce que** : ledit premier module de détection est conçu pour acquérir l'accélération dudit outil d'hygiène buccale, puis les positions horizontale et verticale dudit outil d'hygiène buccale sur la base des positions d'accélération et de référence initiale, ce qui permet d'obtenir la position absolue dudit outil d'hygiène buccale en temps réel.

3. Système d'hygiène buccale tel qu'énoncé dans la revendication 1 ou 2, **caractérisé en ce que** : le dispositif de détection utilisé par ledit deuxième module de détection comprend un capteur de pression, qui est installé sur une extrémité dudit outil d'hygiène buccale et par le sens de la pression appliquée audit capteur de pression, ledit second module de détection détermine si les dents supérieures ou les dents inférieures sont soignées.

4. Système d'hygiène buccale tel qu'énoncé dans l'une quelconque des revendications précédentes, **caractérisé en ce que** : le dispositif de détection utilisé par ledit deuxième module de détection comprend au moins un capteur optique, qui est installé sur une extrémité dudit outil d'hygiène buccale et situé sur le côté supérieur ou le côté inférieur dudit outil d'hygiène buccale et par l'intermédiaire de l'intensité lumineuse dudit capteur optique, ledit deuxième module de détection détermine si les dents supérieures ou inférieures sont soignées.

5. Système d'hygiène buccale tel qu'énoncé dans l'une quelconque des revendications précédentes, **caractérisé en ce que** : ledit dispositif de détection comprend également un troisième module de détection et un quatrième module de détection ; ledit troisième module de détection est conçu pour mesurer la force de brossage et ledit quatrième module de détection est conçu pour mesurer des informations biochimiques dans la cavité buccale.

6. Système d'hygiène buccale tel qu'énoncé dans l'une quelconque des revendications précédentes, **caractérisé en ce qu'**il comprend en outre un serveur en nuage (105) ; ledit équipement terminal communique des données mutuelles avec ledit serveur en nuage par l'intermédiaire du réseau ainsi qu'avec d'autres équipements terminaux par l'intermédiaire dudit serveur en nuage et ledit équipement terminal est également conçu pour enregistrer des données d'hygiène buccale et les télécharger vers ledit serveur en nuage.

7. Système d'hygiène buccale tel qu'énoncé dans l'une quelconque des revendications précédentes, **caractérisé en ce que** : ledit outil d'hygiène buccale est l'un quelconque parmi les outils suivants ou une combinaison quelconque d'entre eux : brosse à dents, fil dentaire, outil d'hygiène des gencives et appareil de rinçage à jet d'eau buccale.

8. Système d'hygiène buccale tel qu'énoncé dans l'une quelconque des revendications précédentes, **caractérisé en ce que** : ledit équipement terminal est également conçu pour simuler une image virtuelle initiale avant l'hygiène buccale, qui affiche au moins l'image utilisée pour représenter les dents, l'image utilisée pour représenter ledit outil d'hygiène buccale et la position initiale entre elles.
